# EUROPÄISCHE PATENTANMELDUNG

(11) **EP 1 890 390 A1**
(43) Veröffentlichungstag der Anmeldung: **20.02.2008**
(21) Anmeldenummer: 06017302.8
(22) Anmeldetag: 18.08.2006
(51) Int. Cl.: H04B 1/40

(54) **Anordnung zur Funkübertragung**

(71) Anmelder: Nokia Siemens Networks GmbH & Co. KG, 81541 München (DE)
(72) Erfinder: Eichinger, Josef Martin, 85464 Neufinsing (DE); Schulz, Egon, Dr., 80993 München (DE)

(57) **Zusammenfassung**

Die Erfindung betrifft eine Anordnung zur Funkübertragung für eine Vielzahl an Funkübertragungsstandards, mit einer digitalen Schnittstelle (DI), einer digitalen Verarbeitungseinrichtung (DPU), einer analogen Verarbeitungseinrichtung (RFPU), mit einem Sendeleistungsverstärker (PA) und mit einem Empfangsleistungsverstärker (LNA).

Eine Konfigurationseinrichtung (CM) ist mit der digitalen Schnittstelle (DI), der digitalen Verarbeitungseinrichtung (DPU), der analogen Verarbeitungseinrichtung (RFPU) und mit dem Empfangsleistungsverstärker (LNA) über Steuerleitungen verbunden. Die digitale Schnittstelle (DI), die digitale Verarbeitungseinrichtung (DPU), die analoge Verarbeitungseinrichtung (RFPU) und der Empfangsleistungsverstärker (LNA) beinhalten Mittel, mit denen eine durch die Konfigurationseinrichtung (CM) gesteuerte Initialisierung für einen wählbaren Funkkommunikationsstandard ermöglicht wird.

## Beschreibung

Die Erfindung betrifft eine Anordnung zur Funkübertragung für eine Vielzahl an Funkübertragungsstandards gemäß dem Oberbegriff des Patentanspruchs 1.

Bei Mobilfunk-Kommunikationssystemen werden zunehmend Basisband-Komponenten von Hochfrequenz-Komponenten räumlich getrennt. Insbesondere bei UMTS- Kommunikationssystemen werden so genannte "Remote Radio Head, RRH" als so genannte abgesetzte Einheiten angeboten, die im Allgemeinen antennennah angeordnet sind. Diese beinhalten sowohl Sende-/Empfangseinrichtungen für Hochfrequenzsignale als auch Einrichtungen für eine vorzunehmende Analog-Digital-Wandlung bzw. Digital-Analog-Wandlung. Bei den entsprechenden Wandlern bzw. Umsetzern werden zunehmend digitale Algorithmen verwendet.

Zur Verbindung einer dezentralen Einheit bzw. eines abgesetzten "Remote Radio Head" mit einer im Allgemeinen zentralen Basisband-Einheit werden standardisierte digitale Schnittstellen verwendet, die beispielsweise gemäß dem CPRI-Standard ausgebildet sind. Eine CPRI-Schnittstelle ist ein serielles Interface, das sowohl für eine kabelgebundene Signalübertragung als auch für eine Übertragung mittels optischen Fasern definiert ist.

Derzeitige "Remote Radio Head" sind speziell für die Verwendung einer Funktechnologie konzipiert. Ein "Remote Radio Head" beinhaltet als typische Komponenten:
Ein digitales Interface, das beispielsweise als CPRI-Interface ausgestaltet ist und zur Übertragung von digitalen Basisbandsignalen von bzw. zur zentralen Einheit verwendet wird.
Eine als "Digital Processing Unit" bezeichnete digitale Verarbeitungseinheit, mit dem für den Sendefall die digitalen Basisbandsignale gemäß dem Funkübertragungsstandard zum Senden vorbereitet werden. Beispielsweise erfolgt hier eine Datenkodierung, eine Modulation, usw. Für den Empfangsfall werden die genannten Schritte in entsprechend umgekehrter Reihenfolge durchgeführt.
Eine als "RF-Processing-Unit" bezeichnete Verarbeitungseinrichtung für trägerfrequente Signale. Mit dieser werden für den Sendefall Ausgangssignale der digitalen Verarbeitungseinheit gemäß dem Funkübertragungsstandard umgewandelt. Beispielsweise erfolgt hier eine Trägerfrequenzumsetzung, Filterung, usw. Für den Empfangsfall werden die genannten Schritte in entsprechend umgekehrter Reihenfolge durchgeführt.
Einen Sendeleistungsverstärker, der trägerfrequente Ausgangssignale der Verarbeitungseinrichtung verzerrungsarm verstärkt sowie einen Empfangsleistungsverstärker, der empfangene trägerfrequente Signale rauscharm verstärkt.
Eine Antennenanordnung bzw. ein Antenneninterface zum Senden bzw. Empfangen von Signalen über angeschlossene Einzelantennen oder über ein angeschlossenes Antennenarray.
   Das Antennenarray könnte beispielsweise als so genannte "Smart Antenna" oder für eine so genannte "Multiple Input Multiple Output, MIMO" - Funkübertragung ausgestaltet sein.

Wird eine Funkfrequenzänderung bzw. eine Änderung im Standard durchgeführt, ist es notwendig, bereits verwendete "Remote Radio Head" unter hohen Kosten auszutauschen.

Es ist daher Aufgabe der vorliegenden Erfindung, eine Anordnung für eine Funkübertragung anzugeben, mit der zur Kosteneinsparung ein Austausch von abgesetzten Einheiten bzw. von "Remote Radio Head, RRH" bei Änderungen weitgehend vermieden werden kann.

Diese Aufgabe wird durch die Merkmale des Patentanspruchs 1 gelöst. Vorteilhafte Weiterbildungen sind in den Unteransprüchen angegeben.

Die erfindungsgemäße Anordnung zur Funkübertragung für eine Vielzahl an Funkübertragungsstandards umfasst:
- ein digitales Interface, das beispielsweise als CPRI-Interface ausgestaltet ist und das zur Übertragung von digitalen Basisbandsignalen von bzw. zur zentralen Einheit verwendet wird,
- eine digitale Verarbeitungseinrichtung, mit deren Hilfe eine digitale Signalaufbereitung für den Sende- bzw. Empfangsfall durchgeführt wird,
- eine Verarbeitungseinrichtung zur trägerfrequenten Signalaufbereitung für den Sende- bzw. Empfangsfall,
- einen Sendeleistungsverstärker, der trägerfrequente Ausgangssignale der Verarbeitungseinrichtung verzerrungsarm verstärkt,
- einen Empfangsleistungsverstärker, der empfangene trägerfrequente Signale rauscharm für eine weitere Verarbeitung in der Verarbeitungseinrichtung verstärkt, und
- eine Antennenanordnung bzw. ein Antenneninterface zum Senden bzw. Empfangen jeweiliger Signale über angeschlossene Einzelantennen.

Die Anordnung umfasst weiterhin als wesentliche erfindungsgemäße Komponente eine Konfigurationseinrichtung und in einer vorteilhaften Weiterbildung eine Antennenkontrolleinrichtung.

Die Konfigurationseinrichtung kann auch als "Configuration Manager" bezeichnet werden und bildet eine zentrale Einheit der erfindungsgemäßen Anordnung.

Mit der Konfigurationseinrichtung wird für jeden einzelnen ausgewählten Funkkommunikationsstandard eine Parameterauswahl durchgeführt. Die ausgewählten Parameter werden zur Initialisierung der vorstehend genannten Einrichtungen für den ausgewählten Funkkommunikationsstandard verwendet.

Durch die Konfigurationseinrichtung wird je nach ausgewähltem Funkkommunikationsstandard entweder Firmware bzw. Software für den Betrieb des jeweiligen Einrichtungen bereitgestellt oder durch dieses zur Bereitstellung geladen. Benötigte Software-Daten werden über das digitale Interface bzw. über die Luftschnittstelle bezogen.

Durch die erfindungsgemäße Anordnung wird eine Anpassung eines Betriebsmodus bzw. eines Funkkommunikationsstandards auch während des Betriebs mit hoher Flexibilität ermöglicht.

Durch die erfindungsgemäße Anordnung wird eine Anpassung von jeweiligen Verarbeitungseinrichtungen hinsichtlich der Luftschnittstelle realisiert.

Durch die erfindungsgemäße Anordnung wird auch eine Anpassung einer verwendeten, digitalen Schnittstelle, die beispielsweise als CPRI-Schnittstelle ausgestaltet ist, ermöglicht.

Je nach gewünschtem Funkübertragungsstandard wird bei der digitalen Schnittstelle ein Schnittstellen-Protokoll angepasst. Beispielsweise wird hier eine Auflösung von Abtastwerten, eine verwendete Taktrate usw. angepasst. Die Anpassung erfolgt somit bevorzugt in einem Remote-Radio-Head und in Abstimmung mit einer dort ebenfalls angeordneten Basisband-Einrichtung.

Die Abstimmung kann dabei entweder per Steuerbefehl, nach einem Austausch von Profilen (z.B. anhand einer Liste von unterstützen Methoden und Protokollen) oder nach Abschluss einer Verhandlung durch beteiligte Kommunikationspartner erfolgen.

Durch eine entsprechend schnell durchführbare Konfiguration der erfindungsgemäßen Anordnung ist es möglich, während des Betriebs Endgeräte mit unterschiedlichen Funkkommunikationsstandards zu versorgen.

Die erfindungsgemäße Anordnung kann beispielsweise vor einer Auslieferung herstellerseitig für einen Standard konfiguriert werden. Alternativ dazu kann die Konfiguration auf wahlweise wechselnde Standards durch Service-Personal oder getriggert durch ein so genanntes "Operation-and-Management"-System erfolgen.

Durch die erfindungsgemäße Anordnung ist es möglich, universell ausgestaltete Hardware für eine Vielzahl von wählbaren Funkkommunikationsstandards vorzuhalten und zu verwenden. Es ist lediglich notwendig, jeweilige Software anzupassen. Dadurch werden Herstellungskosten reduziert.

In einer vorteilhaften Weiterbildung werden durch die erfindungsgemäße Anordnung Statusberichte, Statistikberichte bzw. Fehlerberichte zur Verfügung gestellt, die über die digitale Schnittstelle nach vorher festgelegten Übertragungsmechanismen an eine netzseitig angeordnete Kontroll- und Überwachungseinrichtung übertragbar sind. Die Kontroll- und Überwachungseinrichtung könnte beispielsweise als "Operation, Administration and Maintenance, OAM"-Einrichtung ausgebildet sein.

Ebenso könnten innerhalb der Konfigurationseinrichtung angeordnete Konfigurationsregister über die digitale Schnittselle beschrieben werden, mit Inhalten einer netzseitig angeordneten Einrichtung.

Durch die erfindungsgemäße Anordnung wird eine inhärente Unterstützung von Multi-Hop-Übertragungsverfahren ermöglicht. Beispielsweise werden innerhalb des "Remote-Radio-Head" empfangene Daten direkt auf einen Sendepfad der Anordnung weitergeleitet oder es werden empfangene Daten auf einen Sendezweig eines weiteren "Remote-Radio-Head" weitergeleitet.

Dabei ist es möglich, die zur Weiterleitung bestimmten Daten in der digitalen Verarbeitungseinheit zwischenzuspeichern und sie dort zu verarbeiten. Die auf Basis eines Funkstandards empfangenen Daten können in einer bevorzugten Weiterbildung in der digitalen Verarbeitungseinheit vor der Weiterleitung auf Basis eines zweiten Funkstandards verarbeitet werden.

Nachfolgend wird die Erfindung anhand einer Zeichnung näher erläutert. Dabei zeigt:

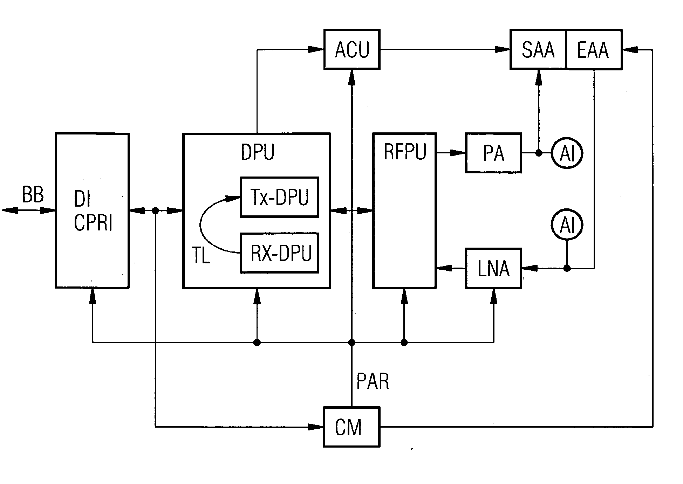

FIG 1 die erfindungsgemäße Anordnung als prinzipielles Blockschaltbild mit einer digitalen Schnittstelle DI, einer digitalen Verarbeitungseinrichtung DPU, einer Verarbeitungseinrichtung RFPU zur Bildung bzw. Verarbeitung von trägerfrequenten Signalen, einem Sendeleistungsverstärker PA und einem Empfangsleistungsverstärker LNA, einer Antennen-Kontrolleinrichtung ACU, einer Konfigurationseinrichtung CM, einer Sendeantenneneinrichtung SAA, einer Empfangsantenneneinrichtung EAA bzw. alternativ dazu einem Antenneninterface AI für anzuschließende externe Sende-/Empfangsantennen.

Die als "digitales Interface" bezeichnete digitale Schnittstelle DI ist gemäß dem CPRI-Standard ausgebildet und weist programmierbare bzw. änderbare Hardware- und Softwarekomponenten auf. Beispielsweise werden hier konfigurierbare Macrozellen, ASIC, FPGA oder DSP verwendet.
Die digitale Schnittstelle DS wird über Parameter PAR gesteuert, so dass eine einstellbare Anzahl an komplexen Basisbandsignalen BB von bzw. zu einer zentralen Einheit (hier nicht dargestellt) übertragbar sind. Die Parameter PAR werden über eine Verbindung von der Konfigurationseinheit zur digitalen Schnittstelle DI übertragen.

Eine Konfiguration der digitalen Schnittstelle DI bezüglich eines zu verwendenden Übertragungsprotokolls erfolgt entweder über eine Datenbank, die für den Fall einer Remote-Radio-Head-Anordnung in diesem selbst angeordnet ist, oder die Konfiguration erfolgt vor einer Inbetriebnahme über einen generischen Programmierkanal der digitalen Schnittstelle DI.

Das Übertragungsprotokoll kann dazu verwendet werden, um eine vorinstallierte Firmware mit einer neuen Firmware zu überschreiben. Nach erfolgreichem Download der neuen Firmware wird über ein Steuersignal bzw. einen Trigger ein neues Übertragungsprotokoll aktiviert.

Eine Rekonfiguration der digitalen Schnittstelle DI auf einen gewünschten anderen Standard wird über die Kontrolleinrichtung CM gesteuert. Die vorstehend genannte Datenbank mit den für die Konfiguration benötigten Parametern wird durch die Kontrolleinrichtung CM verwaltet.

Die digitale Schnittstelle DI ist mit der digitalen Verarbeitungseinrichtung DPU verbunden. Mit Hilfe der digitalen Verarbeitungseinrichtung DPU wird eine digitale Signalaufbereitung für den Sende- bzw. Empfangsfall durchgeführt. Es werden also digitale Sendesignale für eine vorzunehmende spätere Abstrahlung vorbereitet bzw. werden Empfangssignale nachbearbeitet, um diese später über die digitale Schnittstelle DI übertragen zu können.

Je nach Funkkommunikationsstandard bzw. Übertragungsverfahren, je nach Sendebandbreite und Interferenzsituation wird in der Verarbeitungseinrichtung DPU eine jeweils angepasste Signalfilterung durchgeführt.

Auch Verfahren zur Linearisierung der Kennlinie des Sendeleistungsverstärkers PA oder Interpolationsverfahren werden in der Verarbeitungseinrichtung DPU durchgeführt.

Die dazu benötigte Firmware bzw. Hardware wird je nach ausgewähltem Funkkommunikationsstandard über Parameter PAR der Kontrolleinrichtung CM konfiguriert.

Innerhalb der Verarbeitungseinrichtung DPU ist außerdem eine Schleife TL vorgesehen, mit der digitalisierte Empfangswerte nach einer entsprechender Vorverarbeitung direkt in einen Sendezweig der Verarbeitungseinrichtung DPU gegeben werden können. Die ist insbesondere für die vorstehend beschriebene Multi-Hop-Funktionalität der Anordnung von Bedeutung.

Die Verarbeitungseinrichtung RFPU zur Bildung bzw. Verarbeitung von trägerfrequenten Signalen ist überwiegend analog aufgebaut und unterstützt mit ihren Funktionseinheiten in Zusammenarbeit mit der digitalen Verarbeitungseinrichtung DPU mehrere Funkkommunikationsstandards.

Mit Hilfe der Verarbeitungseinrichtung RFPU werden digitale Ausgangssignale der digitalen Verarbeitungseinrichtung DPU in analoge, trägerfrequente Sendesignale umgewandelt und auf eine Zielfrequenz transformiert. Entsprechend werden Empfangssignale in umgekehrter Reihenfolge verarbeitet.

Der ausgewählte Funkkommunikationsstandard bzw. dessen Betriebsmodi werden ebenfalls über die Parameter der Konfigurationseinrichtung CM eingestellt bzw. konfiguriert.

Für den Fall, dass es aufgrund der Komplexität nicht möglich ist, die Verarbeitungseinrichtung RFPU für eine Vielzahl an gewünschten Funkkommunikationsstandards auszulegen, ist die Verarbeitungseinrichtung RFPU modular aufgebaut, so dass im "worst case" einer Standardänderung lediglich einzelne Module manuell ausgetauscht werden müssen.

Mit Hilfe der Konfigurationseinrichtung CM wird dann ein auszutauschendes Modul erkannt bzw. werden verwendbare Module verwaltet.

Der Sendeleistungsverstärker PA bzw. der Empfangsleistungsverstäker LNA werden weitgehend standard-unabhängig ausgewählt. Notwenige Anpassungen an regulatorische Randbedingungen (wie Interferenzen, Spektrumsmaske usw.) werden in der digitalen Verarbeitungseinrichtung DPU durch ein konfigurierbares "Preprozessing" berücksichtigt. Deren Steuerung erfolgt über die Parameter PAR der Konfigurationseinrichtung CM.

Mit der Konfigurationseinrichtung CM wird für jeden einzelnen ausgewählten Funkkommunikationsstandard eine Auswahl an Parametern PAR durchgeführt. Die ausgewählten Parameter PAR werden zur Initialisierung der vorstehend genannten Einrichtungen DI, DPU, ACU, RFPU, LNA, SAA und EAA für den jeweiligen, ausgewählten Funkkommunikationsstandard verwendet.

Je nach Ausstattung der Antenneneinrichtung SAA bzw. EAA ist es möglich, über die Initialisierung verschiedene Antennenkonfigurationen, Bündelungen, Richtcharakterisika, Antennentilts etc. zu definieren.

Die Parameter PAR sind beispielsweise in einer lokalen Datenbank gespeichert oder werden über die digitale Schnittstelle DI abgerufen.

Ebenfalls ist es möglich, die Parameter PAR für den ausgewählten Funkkommunikationsstandard über die Antennenschnittstelle AI von einer eigens dafür vorgesehenen Steuereinheit bzw. Datenbank abzurufen.

Durch die Konfigurationseinrichtung CM wird je nach ausgewähltem Funkkommunikationsstandard entweder Firmware bzw. Software für den Betrieb der jeweiligen Einrichtungen bereitgestellt oder durch dieses zur Bereitstellung geladen. Benötigte Software-Daten werden über das digitale Interface DI bzw. über die Luftschnittstelle der Antennen EAA bzw. der Antennenschnittstelle AI bezogen.

Firmware- bzw. Softwarepakete, die nicht in der lokalen Datenbank verfügbar sind, werden umgehend nachgeladen.

Die lokale Datenbank ist vorteilhafterweise Bestandteil der Konfigurationseinrichtung CM und wird durch diese verwaltet. Ältere Datensätze bzw. nur selten verwendete Datensätze können zugunsten von neu angeforderten Firm- und Softwarepaketen bzw. Konfigurationen gelöscht werden.

Die Antennenkontrolleinrichtung ACU wird dazu benutzt, je nach verwendeter Antennenanordnung bzw. nach Antennenarray verschiedene Antennenbündelungen bzw. Richtcharakteristika zu definieren. Die Antennenkontrolleinrichtung ACU wiederum wird über die Parameter PAR der Konfigurationseinrichtung CM gesteuert.

## Patentansprüche

1. Anordnung zur Funkübertragung für eine Vielzahl an Funkübertragungsstandards,
- mit einer digitalen Schnittstelle (DI), einer digitalen Verarbeitungseinrichtung (DPU), einer analogen Verarbeitungseinrichtung (RFPU), mit einem Sendeleistungsverstärker (PA) und mit einem Empfangsleistungsverstärker (LNA),
- bei der die digitale Schnittstelle (DI) Mittel für eine Übertragung von digitalen Basisbandsignalen beinhaltet,
- bei der die digitale Verarbeitungseinrichtung (DPU) Mittel zur digitalen Signalaufbereitung beinhaltet,
- bei der die analoge Verarbeitungseinrichtung (RFPU) einen Sendepfad mit Mitteln zur Umwandlung von digitalen Signalen in analoge, trägerfrequente Sendesignale und einen Empfangspfad mit Mitteln zur Umwandlung von analogen, trägerfrequenten Empfangssignalen in digitale Signalen beinhaltet,
- die derart miteinander verbunden sind, dass für einen Sendefall digitale Basisbandsignale über die digitale Schnittstelle (DI) und die ihr nachgeschaltete digitale Verarbeitungseinrichtung (DPU) zum Sendepfad der analogen Verarbeitungseinrichtung (RFPU) gelangen und von dort dem Sendeleistungsverstärker (PA) zugeführt werden, und dass für einen Empfangsfall ein trägerfrequentes Empfangssignal über den Empfangsleistungsverstärker (LNA) und über den Empfangspfad der analogen Verarbeitungseinrichtung (RFPU) zur digitalen Verarbeitungseinrichtung (DPU) gelangen, um von dort der digitalen Schnittstelle (DI) zugeführt wird,
**dadurch gekennzeichnet,**
- **dass** eine Konfigurationseinrichtung (CM) mit der digitalen Schnittstelle (DI), der digitalen Verarbeitungseinrichtung (DPU), der analogen Verarbeitungseinrichtung (RFPU) und mit dem Empfangsleistungsverstärker (LNA) über Steuerleitungen verbunden ist, und
- **dass** die digitale Schnittstelle (DI), die digitale Verarbeitungseinrichtung (DPU), die analoge Verarbeitungseinrichtung (RFPU) und der Empfangsleistungsverstärker (LNA) Mittel beinhalten, mit denen eine durch die Konfigurationseinrichtung (CM) gesteuerte Initialisierung für einen wählbaren Funkkommunikationsstandard ermöglicht wird.

2. Anordnung nach Anspruch 1, **dadurch gekennzeichnet,**
- **dass** die Konfigurationseinrichtung (CM) mit einer Antennenkontrolleinrichtung (ACU) zur Steuerung verbunden ist,
- **dass** die Antennenkontrolleinrichtung (ACU) mit einer Antenneneinrichtung (SAA, EAA) verbunden ist, und
- **dass** die Antennenkontrolleinrichtung (ACU) Mittel beinhaltete, mit denen eine durch die Konfigurationseinrichtung (CM) gesteuerte Initialisierung der Antenneneinrichtung für einen wählbaren Funkkommunikationsstandard ermöglicht wird.

3. Anordnung nach Anspruch 1 und 2, **dadurch gekennzeichnet, dass** Mittel vorgesehen sind, die Fehlerberichte oder Betriebsberichte oder Betriebszustandsstatistiken erstellen und diese über die digitale Schnittstelle nach vorher festgelegten Übertragungsmechanismen an eine netzseitig angeordnete Kontroll- und Überwachungseinrichtung übertragen.

4. Anordnung nach Anspruch 3, **dadurch gekennzeichnet, dass** die Kontroll- und Überwachungseinrichtung als "Operation, Administration and Maintenance, OAM"-Einrichtung ausgebildet ist.

5. Anordnung nach einem der vorhergehenden Ansprüche, **dadurch gekennzeichnet, dass** innerhalb der Konfigurationseinrichtung Konfigurationsregister angeordnet sind, die über die digitale Schnittstelle mit Inhalten einer netzseitig angeordneten Einrichtung beschrieben werden.

6. Anordnung nach einem der vorhergehenden Ansprüche, **dadurch gekennzeichnet,**
- **dass** zur Unterstützung eines Multi-Hop-Übertragungsverfahrens ein Sendepfad vorgesehen ist,
- wobei dem Sendepfad über die Antennenanordnung empfangene Daten direkt zugeführt werden, oder
- wobei die über die Antennenanordnung empfangenen Daten auf einen Sendepfad eines von der Anordnung räumlich getrennten weiteren "Remote-Radio-Head" weitergeleitet werden.
